# EUROPEAN PATENT APPLICATION

(11) **EP 2 383 690 A1**
(43) Date of publication of application: **02.11.2011**
(21) Application number: 10305451.6
(22) Date of filing: 28.04.2010
(51) Int. Cl.: G06Q 20/00, G07F 7/08

(54) **A portable device for communicating data relating to a user account managed by a contact-less token, corresponding method and system**

(71) Applicant: Gemalto SA, 92190 Meudon (FR)
(72) Inventor: Wijaya, Ganda, 120514, Singapore (SG)

(57) **Abstract**

The invention relates to a portable device 12 for communicating data relating to a user account managed by a contact-less token 16.

According to the invention, the device is adapted to send, via a short-range radio-frequency link 15, data relating to a command 218 for accessing data relating to the user account.

The invention also relates to corresponding communication method and system.

## Description

### Field of the invention:

The invention relates, in a general manner, to a portable device for communicating data relating to a user account managed by a contact-less token.

Within the present description, a token is a smart object that is intended to communicate with the outside world.

Likewise, within the present description, the adjective "contact-less" used within the expression "contact-less token" means notably that the token communicates via a short range radio-frequency link by using, for example, International Standardization Organization/ International Electrotechnical Commission (or ISO/IEC) 14 443 specifications or the like.

The contact-less token may be constituted in particular by an Near Field Communication (or NFC) token.

Furthermore, the invention relates to a method for communicating data relating to a user account managed by a contact-less token.

Finally, the invention relates to a system for communicating data relating to a user account managed by a contact-less token.

The present invention is applicable, in particular, when a user of a contact-less card, as a contact-less token, needs to credit a user account, for example, relating to an application relating to transport means, such as a bus, a subway, a plane, and/or a train, when the application is embedded within the contact-less token.

### State of the art:

A known solution for crediting a user account managed by a contact-less token is based upon a use of an automatic teller machine (or ATM) equipped with a contact-less card reader, so that a count of travelling rights is increased. Thus, a person who owns the contact-less token that stores her or his user account adds a certain number of travelling rights.

However, such a known solution implies that the contact-less token user goes into premises to access the ATM, and through this latter, her or his user account managed by the contact-less token.

Thus, there is a need to facilitate access to a user account.

### Summary of the invention:

The invention proposes a solution for satisfying the just hereinabove specified need by providing a portable device for communicating data relating to a user account managed by a contact-less token.

According to the invention, the device is adapted to send, via a short-range radio-frequency link, data relating to a command for accessing data relating to the user account.

The principle of the invention consists in using a portable device for interacting, through a short range radio-frequency link, with an external entity, namely a contact-less token, that manages data relating to a service.

It is to be noted that the user account may relate to any kind of application or service, such as a transport service, a wallet service, a bank service, or the like.

Thus, the invention solution makes it possible to exchange between the portable device and the contact-less token information relating to the user account and without the need of any intermediary external entity (between the portable device and the contact-less token) whose access is limited.

Accordingly, contrary to the known solution that is described supra, the proposed solution does not require, for a user of the contact-less token, to go into premises in which there is an ATM, so as to access her or his user account of an application supported by the contact-less token.

The use of the portable device allows discussing directly and in live with the contact-less token without suffering from any external constraint delaying or slowing down the discussion.

A user of the contact-less token may use the invention portable device any where and any time, so as to access her or his user account in an easy, direct and simple manner.

The invention solution thus facilitates the access to a user account managed by the contact-less token and is therefore convenient and user-friendly.

The portable device may be a terminal or a token.

As terminal, it can be any device including means for processing data, means for sending to and/or receiving data from outside through a short range radio-frequency link, comprising or being connected to means for interfacing with a user, such as a loudspeaker and/or a display screen, and comprising or being connected to means for storing data.

For example, the terminal may be a mobile telephone, a smart telephone, a Personal Digital Assistant (or PDA), a mobile laptop, a portable TeleVision (or TV) and/or a netbook.

As token, it can be any electronic device comprising means for processing data, means for sending to and/or receiving data from outside through a short range radio-frequency link, comprising or being connected to means for interfacing with a user, such as a loudspeaker and/or a display screen, and comprising or being connected to means for storing data.

According to a further aspect, the invention is a method for communicating data relating to a user account managed by a contact-less token.

According to the invention, the contact-less token comprising means for managing a user account, the method comprises a step in which a portable device sends, via a short-range radio-frequency link, to the contact-less token data relating to a command for accessing data relating to the user account.

According to a further aspect, the invention is a system for communicating data relating to a user account managed by a contact-less token, as a second token. The system comprises comprising an antenna able to communicate through a short range radiofrequency link and a token, said first token.

According to the invention, the first token is adapted to send, via the short-range radio-frequency link, to the second token, data relating to a command for accessing data relating to the user account.

The first token may cooperate with a NFC chip, so as to communicate with the contact-less token. In other words, the first token involves the NFC chip, as an intermediary entity, to benefit from its capacity to communicate through an antenna controlled by the NFC chip, with the contact-less token.

The first token is any electronic medium that may have different form factors. The first token can constitute any electronic medium.

For example, the first token can be embodied within a smart card, a Secure Digital (or SD) type card, a Multi-Media type Card (or MMC), a smart dongle of the USB (acronym for "Universal Serial Bus") type, or a chip to be fixed to a user terminal, as host device, possibly in a removable manner.

### Brief description of the drawings:

Additional features and advantages of the invention will be more clearly understandable after reading a detailed description of one preferred embodiment of the invention, given as one indicative and non-limitative example, in conjunction with the following drawings:

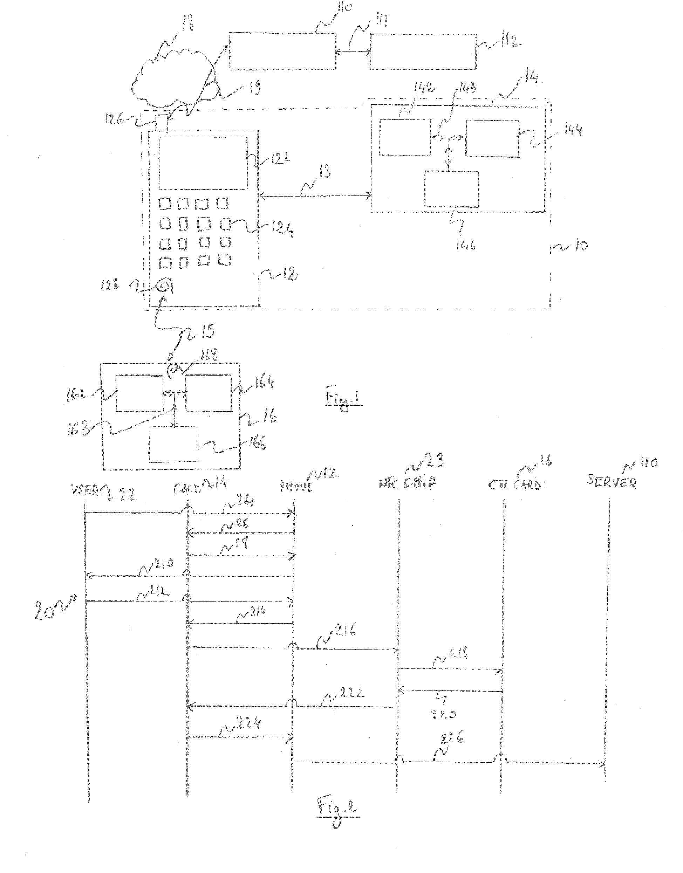

- Figure 1 represents a simplified diagram of one exemplary embodiment of a system for communicating data relating to a user account managed by a contact-less smart card, as a second token, the system comprising one NFC mobile telephone, as user terminal, and a smart card, as a first token, the system being adapted to allow the first token to exchange, through an antenna housed by the user terminal, data relating to a user account of an application (or a service) supported by the second token, according to the invention; and
- Figure 2 illustrates a simplified message flow of one exemplary embodiment of a method implemented notably by the first token of the system of figure 1, so that the terminal user accesses user account information relating to the application managed by the second token.

### Detailed description:

Herein under is considered a case in which the invention method for communicating data relating to a user account managed by a contact-less smart card is implemented by a Subscriber Identity Module (or SIM) type smart card in cooperation with one NFC chip connected to an antenna under its control and housed within a (user) terminal.

However, the invention method for communicating data relating to a user account managed by a contact-less smart card may be implemented by a user terminal or a token, as a portable device for communicating data relating to a user account managed by a contact-less token. In other words, according to such two embodiments (not represented), the terminal or the token does not cooperate with any token or any terminal respectively, so as to access information relating to the user account managed by the contact-less token. According to such two embodiments, the terminal or the token is adapted, so as to exert, on its own, the functions carried out by the token and the terminal and that are hereinafter described. In particular, the terminal or the token is provided with an antenna that is configured to exchange data, through a short range radio-frequency link, with the contact-less token.

Figure 1 shows one embodiment of an electronic system 10 for communicating data relating to a user account managed by a contact-less smart card 16, as a second token and as an external entity (with respect to the system 10).

The system 10 for communicating data relating to a user account comprises a NFC mobile telephone 12, as a terminal, and a Universal Integrated Circuit Card (or UICC) type smart card 14, as a first token. The UICC type smart card 14 cooperates with the NFC mobile telephone 12.

As to the terminal, instead of being constituted by a NFC mobile telephone, the terminal may be, for example, a PC, a desktop computer, a laptop computer, a set top box, a netbook and/or a PDA.

For the sake of clarity and conciseness, the NFC mobile telephone 12, the UICC type smart card 14 and the contact-less (or CTL) smart card 16 are termed hereinafter the phone 12, the card 14 and the CTL card 16 respectively.

According to another embodiment, instead of a CTL card, the second token may be a contact-less smart dongle of the USB type, or a chip to be fixed to a user terminal, as host device, possibly in a removable manner.

The CTL card 16 preferably includes at least one microprocessor 162, as data processing means, at least one memory 164, and at least one Input/Output (or I/O) interface 166 which are internally linked together through a data and control bus 163.

Alternately (not represented), the CTL card 16 includes at least one memory and at least one I/O interface, i.e. without processing capabilities.

The CTL card 16 belongs to a user.

The CTL card 16 user has subscribed to a service(s) managed by CTL card 16.

The CTL card 16 manages a user account for a service or a plurality of services, like a transport service, namely a service for transporting the CTL card 16 owner, as carrier and user of the CTL card 16, by a bus, a subway, a train and/or a plane, a wallet service and/or other service(s).

The memory 164 comprises data relating to the concerned user, as user data (as non-executable data), and at least one corresponding application relating to the managed service(s), i.e. executable data, that is offered to the CTL card 16 user.

The user data may relate to a value of the user account, a possible limitation of the use of the service(s) (like a limitation in terms of allowed identifier(s) of the transport means, a limitation in terms of geographical place for a transport service and/or a limitation in terms of travelling rights), and/or other data.

The application allows notably to credit or debit the user account with a value of one or several units for one or several possible travels. The user account is managed like a counter.

The counter may have been pre-defined with a fixed value, like 10 units. The counter value is increased each time the CTL card 16 user credits her or his user account with a fixed unit amount, like one or several units. Conversely, the counter value is decreased each time the CTL card 16 user debits her or his user account with a fixed unit amount, like one or several units. Thus, the user or on its behalf may add to or subtract from the current counter value a certain value of units relating to the user account for such an operation of credit (after having possibly paid some money) or debit of the user account respectively.

The CTL card 16 also comprises one antenna 168 that is connected to the I/O interface 166.

The antenna 168 is configured to receive data from and send data to outside, through a short range radiofrequency link 15.

The short range radiofrequency may be fixed at, for example, 13.56 MHz.

To access the CTL card 16, the system 10 for communicating data relating to a user account managed by the CTL card 16 has to be present in the direct vicinity of the CTL card 16, up to some tens of cm, and typically up to 20 cm.

As to the card 14, the card 14 includes a microprocessor 142, as means for processing data, at least one memory 144, and at least one I/O interface 146 which are all linked together through a control and data bus 143.

The card 14 preferably stores securely, within its memory 144, an International Mobile Subscriber Identity (or IMSI), as a unique number associated with all Global Service for Mobiles (or GSM), Universal Mobile Telecommunications System (or UMTS), Code Division Multiple Access (or CDMA) and/or Long Term Evolution (or LTE) type network(s) mobile phone users. The mobile radio-communication network list is not exhaustive but only for exemplifying purposes and is not considered to reduce the scope of the present invention.

The IMSI is used to identify a subscriber in relation to one or several mobile radio-communication networks.

The card 14 can store, within its memory 144, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

The card 14 stores, preferably within a non-volatile part of the memory 144, an application algorithm relating to a process, according to the invention, for communicating data relating to the user account managed by the CTL card 16.

The user preferably accesses this application and triggers its execution, through and a Sim Application ToolKit (or STK) like menu or a Web server embedded within the card 14 that lists all the applications supported by the card 14.

As known per se, the card 14 is able to initiate actions, in order to interact directly with the outside world, in an independent manner of the phone 12 and the mobile radio-communication network. Such a capacity of interaction at the initiative of the card 14 is also known as proactive capacity. The card 14 is thus enable to send, at its own initiative, to the phone 12 a proactive command for displaying, through the display screen 122 of the phone 12, some message, also known as "Display text", and/or another command for requesting a user input, through the phone 12 man machine interface.

The I/O interface 146 of the card 14 is preferably connected, through a single wire, i.e. one of the eight contacts of the International Standard Organization (or ISO) 7816 interface, by implementing a Single Wire Protocol, to the NFC chip, to exchange data between the card 14 and a NFC chip (not represented).

The card microprocessor 142 executes notably the application algorithm, so as to access the CTL card 16 data, i.e. send, through an antenna 128 controlled by the NFC chip, data relating to a command for accessing data relating to the user account. As command for accessing data relating to the user account, it may be a command for crediting the current user account managed by the CTL card 16 with a predetermined value, such as an amount value either previously stored within the card 14 or previously defined by the card 14 user. To let define the amount value by the user, the card 14 stores an application for interacting with the user preferably through the phone 12 man machine interface.

The card microprocessor 142 preferably executes security functions, in order to protect an access to information managed through or by the card 14.

The security functions include preferably a user authentication process to be used before accessing a user account, be it managed by either the CTL card 16 or the remote server 110. To authenticate the user, the card 14 may store an application for verifying a Personal Identity Number (or PIN) securely stored by the card 14 and to be input by the card 14 user, so as to compare the input data with the stored PIN, so as to authorize the running of the application algorithm.

The security functions include preferentially an encryption/decryption process to be used before sending, to the CTL card 16, data, as command, and/or after receiving from the CTL card 16 data, as response to the sent command, so as to protect an access to the data relating to a user account managed by the CTL card 16 and exchanged between the card 14 and the CTL card 16.

The security functions may include an encryption/decryption process to be used before sending, to the remote server 110, data relating to another user account as command, and/or after receiving from the remote server 110 data, as response to the sent command, so as to protect an access to the data relating to a user account managed by the remote server 110 and exchanged between the card 14 and the remote server 110.

The antenna 128 is housed by the phone 12. The antenna 128 may be carried by the phone 12, a support fixed to a phone house or a phone component (like a battery) or the card 14 itself.

The NFC chip may be carried by a phone house, a support to be fixed to a phone component (like a battery), or a body of the card 14.

The NFC chip is notably used for exchanging with the CTL card 16 that is external to the phone 12.

The NFC chip is connected to the antenna 128 that is arranged to communicate, through a short range radio-frequency link 15, notably with the CTL card 16.

The NFC chip includes notably a microprocessor.

The NFC chip plays a role of a modulator-demodulator (or modem) for the card 14, i.e. a device that:
- modulates an analogical carrier signal to encode digital information received from the card 14 to be transmitted, over the antenna 128, to the CTL card 16, and
- demodulates a received analogical carrier signal to decode the encoded digital information that is received, over the antenna 128, from the CTL card 16.

The NFC chip is used in a reader mode, so as to let communicate the card 14 and the CTL card 16. As such, the NFC chip is powered directly or indirectly (i.e. through the phone 12 microprocessor) by a battery housed within the phone 12 and transmits, through the antenna 128, a signal with sufficient power, so as to also power the CTL card 16. Thus, the CTL card 16 may perform tasks or operations requested from or through the card 14.

The card 14 includes preferably an ISO 7816 interface, so as to let communicate, through a contact link 13, the card 14 and the phone 12. The communication between the card 14 and the phone 12, as handset, is used in particular to benefit from the man machine interface of the phone 12 and possibly an access to the mobile radio-communication network(s) to which the phone 12 may be connected.

The phone 12 includes at least one battery (not represented), at least one microprocessor (not represented), at least one memory (not represented) and at least one I/O interface.

The phone I/O interface includes an interface, so as to exchange data with the card 14. The interface with the card 14 may be an ISO 7816 interface, as a contact interface when the card 14 is lodged within the phone 12.

The phone I/O interface comprises preferably a display screen 122, a keyboard 124, and two antennas 126 and 128.

The display screen 122 and the keyboard 124 may be used for exchanging information between a phone user and the phone 12 or another entity(ies) to which the phone 12 is connected, like the card 14, the CTL card 16 and/or the remote server 110.

The antenna 128 is arranged to let communicate, through the short range radio-frequency link 15, notably the card 14 and the CTL card 16.

The antenna 126 is used for exchanging, through a mobile radio-communication network 18 and a long-range wireless link 19, information with a remote server 110.

The mobile radio-communication network 18 may be connected to the Internet network.

Alternatively, the remote server 110 is accessible through a reader terminal (not represented) that is connected to a communication network. According to such an alternative, instead of being used in a reader mode, the NFC chip of the phone 12 is used in a transponder mode, i.e. the NFC chip is powered through a signal transmitted by the reader terminal that is close enough to the NFC chip of the phone 12, so as to exchange, through the reader terminal, with the remote server 110.

The remote server 110 is connected, preferably through a wire link 111, to a memory 112 storing a database, as user account list.

The memory 112 is therefore accessible from the remote server 110.

The remote server 110 is hosted by a computer and is dedicated to running an application for managing the database and communicating some information of the database to outside.

The remote server 110 manages a plurality of user accounts.

The database associates each user account identifier with other data relating to the concerned user account, like a current value of the user account. The user account list relates to one or several service user account lists, like a mobile radio-communication network user account list, a bank user account list, and/or a (public or private) transport user account list.

The remote server 110 may be operated by either a mobile radio-communication network operator or on its behalf, and/or a service provider or on its behalf, like a bank operator. As service provider, it may be a company, as a transport operator, that manages a transport service, like a bus, a train, a plane and/or a wallet service.

The phone 12 is preferably equipped with the NFC chip.

The microprocessor of the phone 12 may be connected to the NFC chip.

The phone memory stores data, like user data, and at least one application. As application(s), there is preferably at least a Web browser, so as to access, through a Web server embedded within the card 14, at least one application supported by the card 14 and that allows to exchange data with the phone user and the CTL card 16 (described further in details hereinafter).

According to an alternative, instead of using a Web browser supported by the phone 12, the user accesses a list of application(s) supported by the card 14, through a menu stored within the card 14 and supplied to the phone 12.

The phone microprocessor processes data originating from the phone memory.

The phone microprocessor executes preferably the Web browser, as user interface, so as to interact with the application(s) supported by the card 14 and offered to the phone user.

The phone 12 is preferably arranged to connect, through a mobile radio-communication network, to the remote server 110, thanks to data provided by the card 14, for example, the IMSI and a Uniform Resource Locator (or URL) relating to the remote server 110.

Figure 2 depicts an example of a message flow 20 that involves a card user 22, the card 14, the phone 12, the NFC chip 23, the CTL card 16, and the remote server 110.

It is assumed that the user 22 owns the card 14 and the CTL card 16.

It is further assumed that the display screen 124 of the phone 12 displays a list of application(s) offered from or through the card 14.

In the explained example, the user 22 accesses, through the phone 12 man machine interface, thanks to an application supported by the card 14, the user account managed by the CTL card 16, so as to credit its user account.

Firstly, the user 22 selects 24, through the display screen 122 and the keyboard 124 of the phone 12, the application for accessing data managed by the CTL card 16.

The phone 12 (and more exactly its microprocessor) detects that the selected application is supported by the card 14.

The phone 12 addresses to the card 14 a corresponding request 26 for selecting the concerned application chosen by the user 22.

The card 14 triggers an execution of the selected application.

Optionally, the card 14 checks whether the user 22 is the true user, for example, by verifying that a PIN entered by the user 22 matches the PIN stored within the card 14, in order to authenticate the user 22 before accessing the user account managed by the CTL card 16.

Then, the card 14 sends to the phone 12 (and more exactly its microprocessor) a request 28 for inputting a credit value that is intended to the user 22.

The phone 12 prompts the user 22 to define or select, among several proposed one(s), a credit value with which the user account of the CTL card 16 has to be credited by sending to the display screen 122 a message for inputting a credit value to be displayed. For example, a corresponding message, such as "Please give a credit value" is displayed.

The user 22 enters 212, through the keyboard 124, a credit value that she or he desires to use for increasing her or his user account with a corresponding amount value.

Then, the phone 12 (and more exactly its microprocessor) sends to the card 14 a corresponding response message 214 with the input credit value.

According to another embodiment, instead of being defined by the user 22, the credit value is pre-defined and stored within the card 14 avoiding thus to prompt the user 22 to define the credit value, and therefore the exchanged messages 210 and 214 for interacting with the user 22.

The card 14 processes the defined (or predefined) credit value. The card 14 may verify whether one or several conditions are satisfied. For example, the condition(s) stored within the card 14 may be to check whether the defined credit value is not less than one predetermined minimum threshold value and/or is not greater than one predetermined maximum threshold value stored within the card 14. In such a case, data relating to the condition(s) to be satisfied is stored within the card 14.

When the card 14 has processed the defined credit value (after having possibly successfully satisfied some condition(s)), then the card 14 sends to the NFC chip 23 a command 216 for crediting the current user account with the defined credit value while identifying the CTL card 16, as addressee.

The NFC chip 23 transmits, through the antenna 128, via a short-range radio-frequency link, to the identified CTL card 16 a command 218 for crediting the user account with the defined credit value.

Once the CTL card 16 has received the command 218 for crediting the user account with the defined credit value, the CTL card 16 increases a corresponding user account counter by adding to its current amount value the defined credit value.

As soon as the credit operation has been successful performed, the CTL card 16 preferably sends back, via a short-range radio-frequency link, through the antenna 128, to the NFC chip 23 a response 220 (to the command) for informing the card 14 that the credit operation command has been successfully completed or executed by the CTL card 16.

On the contrary, when the credit operation has not been successful, namely the CTL card 16 has not increased a corresponding user account counter by adding to its current amount value the defined credit value, the CTL card 16 sends back (not represented), via a short-range radio-frequency link, through the antenna 128, via the NFC chip 23, to the card 14 a message for informing the card 14 that the credit operation command has not been successfully completed by the CTL card 16.

Thus, the NFC chip 23 routes to the card 14 a corresponding message 222 for informing the card 14 that the credit operation has been successfully performed.

Optionally, the card 14 informs the user 22 that the credit operation has been successfully performed by sending possibly, through the phone 12, a message (not represented) like "Credit operation completed" that is displayed via the display screen 122.

Optionally, the card 14 checks whether the user 22 is the true user, for example, by verifying that a PIN entered by the user 22 matches the PIN stored within the card 14, in order to authenticate the user 22 before accessing the user account managed by the remote server 110. The used PIN for accessing the user account managed by the remote server 110 may be distinct from the used PIN for accessing the user account managed by the CTL card 16.

Preferably, once the credit operation has been executed, the card 14 sends to the phone 12 a command 224 for debiting a user account with a corresponding debit value while identifying an addressee of the message, for example, a URL or a telephone call number of the remote server 110 that is stored within the card 14.

The corresponding debit value managed by the card 14 and to be managed by the remote server 110 may be identical to the credit value managed by the card 14 and the CTL card 16.

The corresponding debit value managed by the card 14 and to be managed by the remote server 110 may be distinct from the credit value by the card 14 and the CTL card 16 in particular when the corresponding user accounts are distinct from each other. For example, the user account managed by the CTL card 16 is related to one service, like a transport service, while the user account managed by the remote server 110 is related to another service, like a bank service.

The phone 12 transmits, via a long range radio-frequency link, to the identified remote server 110 a message 226 for debiting a user account with a specified debit value. The message 226 for debiting a user account with a specified debit value may be a Short Message Service (or SMS) type message or other kind of message.

The remote server 110 processes the command for debiting the user account with the specified debit value.

Optionally, the remote server 110 verifies whether some condition(s) is(are) satisfied prior to an execution of a debit operation by using the specified requested debit value. For example, the requested debit value is not greater than a predefined maximum threshold value (stored at the remote server 110 side) and/or the requested debit value is not less than a predefined minimum threshold value (stored at the remote server 110 side). The remote server 110 may also request by sending to the user 22 and/or the card 14 a message for retrieving further information, so as to authenticate the user 22 and/or the card 14.

The remote server 110 (after having possibly verified condition(s) to be satisfied) decreases a corresponding counter relating to the user account managed by the remote server 110 while subtracting the current counter value from an amount value corresponding to the requested debit value.

Optionally, once the remote server 110 has completely or not executed the debit operation, the remote server 110 sends back, via the phone 12, to the card 14 a message for informing the card 14 and/or the user 22 that the debit operation has been successfully completed or not.

A lot of amendments may be brought to the described message flow without departing from the invention spirit. For example, instead of firstly accessing the CTL card 16, the access to the remote server 110 is executed according to another embodiment, in order to execute a debit operation while accessing the user account managed by the remote server 110 before executing a credit operation while accessing the user account managed by the CTL card 16.

The use of the card 14 facilitates an interaction with the CTL card 16 that stores and manages data relating to a user account.

The card 14 use improves a time needed to let perform any operation, like a credit operation or debit operation, at the CTL card 16 side since no intermediary external device, like a reader terminal connected to a communication network, is required to access the CTL card 16.

Such a use of the card 14 is easy and therefore convenient for the user 22, since the user 22 may use it anywhere and at anytime for a direct access to her or his user account.

## Claims

1. A portable device (12) for communicating data relating to a user account managed by a contact-less token (16),
**characterized in that** the device is adapted to send, via a short-range radio-frequency link (15), data relating to a command (218) for accessing data relating to the user account.

2. Device according to claim 1, wherein the device comprises means for sending a command for crediting the current user account with a first predetermined value.

3. Device according to claim 1 or 2, wherein the device comprises means for receiving, as response, a message for informing whether the sent command has been successfully completed or not.

4. Device according to any of claims 1 to 3, wherein the device comprises:
- means for encrypting the command for accessing data relating to the user account;
- means for decrypting a response to the sent command;
- means for sending a command for accessing data relating to another user account; and/or
- means for verifying whether the portable device user has rights for accessing the user account and/or the other user account.

5. A method (20) for communicating data relating to a user account managed by a contact-less token (16),
**characterized in that**, the contact-less token comprising means for managing a user account, the method comprises a step in which a portable device (10) sends, via a short-range radio-frequency link (15), to the contact-less token data relating to a command (218) for accessing data relating to the user account.

6. Method according to claim 5, wherein the portable device sends to the contact-less token a command for crediting the current user account with a first predetermined value.

7. Method according to claim 5 or 6, wherein, a first token (14) being coupled to the portable device (12), the first token verifies whether the portable device user has rights for accessing the user account managed by the contact-less token, as a second token, and/or another user account managed by another external entity (110).

8. Method according to claim 5 or 6, wherein the portable device sends to a remote server (110) a command (226) for modifying a current value of another user account with a second predetermined value.

9. Method according to claim 8, wherein the portable device or a first token, the first token (14) being coupled to the portable device (12), sends to the remote server a command (226) for debiting another user account with the second predetermined value, the remote server sends back, as response, to the portable device or the first token, a message for informing whether the sent command has been successfully completed or not.

10. A system (10) for communicating data relating to a user account managed by a contact-less token (16), as a second token, the system comprising an antenna (128) able to communicate through a short range radiofrequency link (15) and a token (14), said first token,
**characterized in that** the first token is adapted to send, via the short-range radio-frequency link, to the second token, data relating to a command (216) for accessing data relating to the user account.
